# EUROPEAN PATENT APPLICATION

(11) **EP 1 477 059 A1**
(43) Date of publication of application: **17.11.2004**
(21) Application number: 03730939.0
(22) Date of filing: 10.04.2003
(51) Int. Cl.: A01K 61/00, A23K 1/16

(54) **FOOD ADDITIVES FOR HYDROBIONTS**

(30) Priority: 20.11.2002 RU 2002001148
(71) Applicant: Obschestvo s Ogranichennoi Otvetstvennostju " Bio-3", Moscow, 103009 (RU); Obschestvo s Ogranichennoi Otvetstvennostju " Nauchno-Proizvodst vennoe predpriyatie " Vitan", Verkhnedneprovsky raion, Dnepropetrovskaya obl., 51650 (UA)
(72) Inventor: AVCHIEVA, Penker Babaevna, Moscow, 117593 (RU); TJURENKOV, Vladimir Alexandrovich, Moscow, 129346 (RU); TJURENKOV, Alexei Alexandrovich, Moscow, 111555 (RU); SIDOROV, Nikolai Andreevich, Dnepropetrovsk, 49126 (UA); KUNSCHIKOVA, Inna Sergeevna, Dnepropetrovskaya obl., 51600 (UA); TURIANSKY, Jury Davidovich, Zaporozhie, 69035 (UA)
(74) Representative: Meissner, Peter E., Dipl.-Ing.
(86) International application number: PCT/RU2003/000149
(87) International publication number: WO 2004/045277

(57) **Abstract**

The present invention relates to aquaculture and particularly to the production of feed additives for hydrobionts grown under controlled conditions, and may be useful for providing hydrobionts with full-value feeds for stimulating their growth, and obtaining meat of hydrobionts featuring high consumptive quality.

The proposed additive also provides for an increase in the yield of young hydrobionts and for pigmentation of hydrobionts' meat. The additive contains a complex of vitamins, amino acids, lipids, microelements, etc. and comprises β-carotene-containing biomass of the Blakeslea trispora fungus.

## Description

### TECHNICAL FIELD

The present invention relates to aquaculture and particularly to the production of feed additives for food hydrobionts grown under controlled conditions, and may be useful for providing hydrobionts with full-value feeds for their growth, health and obtaining high consumptive quality meat.

### BACKGROUND OF THE INVENTION

When hydrobionts are reared under aquaculture conditions for obtaining high consumptive food products, much attention is paid to feeds. Full-value feeds must comprise various macroelements (proteins and lipids) and micronutrients (vitamins and pigments). Among vitamins, much attention is paid to fat-soluble vitamins (A, E, K, D) and to water-soluble vitamins (C, group B, panthotenic acid, nicotinic acid, biotin, and others). Using full-value feeds in aquaculture guarantees good growth, optimal health status, reproductive growth of hydrobionts being cultivated, and sucessively improving the quality and consumptive properties of meat (RF 2180776, 2108732, 2028048).

When rearing Atlantic salmon and rainbow trout in aquaculture, for imparting required color to meat, caratinoids are added to feeds: astaxanthin and, in a smaller measure, canthaxanthine. Vitamins C, E, astaxanthin and canthaxanthin are detected in fish meat and play a vitally important role in the protection of cell membranes and lipids against oxidation in the process of growth and after fish processing, this being of particular importance for maintaining high consumptive properties of meat. Most of the absorbed astaxanthin is used in metabolic processes and only 10-20% is deposited in tissues, wherefrom it is later mobilized for precipitating in the roe and skin during the reproductive period. Astaxanthin plays a key role not only in the reproduction, growth and survival of young hydrobionts, in the antioxidant protection of membranes and lipids, but also functions as a precursor of vitamin A.

A feed additive for fish, particularly for carp, is known, into which, besides the main components, biomass of feed β-carotene (microbial carotene feed preparation, commercial name KPMK) is included in an amount of 0.5-1.5% (SU 1629008 A1). The feed additive disclosed in SU 1629008 A1 provides better assimilation of nutrient fodder components and thereby the fish productivity of carp. However, from the presented specification the effect of the carotene-containing biomass (KPMK) on the fish productivity cannot be assessed quantitatively.

According to US 522146, β-carotene-containing Dunaliella bardawil alga powder is introduced into the feed additive. Introducing such additive into the ration provides 7% increase in the body length and 34% increase in the body weight of fish. However, in order to prevent liberation of the oily β-carotene preparation from the algae into water and formation of an oily film on the surface of the water body, the algae are sorbed on cyclodextrin.

This adds materially to the costs of feed preparation and, correspondingly, makes the fish production process more expensive.

In US 5605699 a method is described of pigmenting the integuments and meat of poultry and fish with caratenoid pigments. For this purpose it is proposed to use one or more different caratenoids produced by way of chemical synthesis. However, in the chemical synthesis of substances of such chemical nature as caratenoids, a mixture of optical isomers is necessarily formed, and therefore their biological value and effectiveness as pigments for the pigmentation of the meat of poultry and fish are lowered considerably. Furthermore, using pigments of carotene nature in chemically pure crystalline form involves problems of preserving their stability with regard to oxygen, temperature, humidity, etc., which makes their practical application difficult and increases the cost of feeds.

### ESSENCE OF THE INVENTION

It is an object of the present invention to enhance the biological value of feeds for hydrobionts by the provision of a freed additive that features an enhanced biological value and a reduced prime cost and makes it possible to increase the yield of young hydrobionts, to stimulate the growth of hydrobionts, and to pigment their meat.

This object is accomplished by using in feeds as a vitamin additive and a pigment for the pigmentation of fish meat of β-carotene-containing biomass of Blakeslea trispora fungus (commercial name KPMK, purchasable from the manufacturer - Vitan Company, Ukraine).

The biomass of Blakeslea trispora fungus is a full-value feed additive containing a complex of vitamins, antioxidants, amino acids and lipids (see Table I) (1, 2, 3, 4).

**Table 1**

| **Composition of biomass of Blakeslea trispora fungus** | |
|---|---|
| Humidity, % | 4.8-6.1 |
| Raw protein, % | 16.1-25.5 |
| Lipids, % | 50-65 |
| Beta-carotene, % | 6.0-12.0 |
| Cellular tissue, % | 2.9-5.1 |

| **Fractional composition of lipids** | |
|---|---|
| Phospholipids, % | 12.0-13.0 |
| Monoglycerides, % | 2.6-4.0 |
| Diglycerides, % | 2.0-7.9 |
| Sterols, % | 4.0-4.3 |
| Ergosterol, % | 2.35-2.7 |
| Free fatty acids, % | 19.5-19.9 |
| Triglycerides, % | 50.6-52.7 |
| Total ubiquinones (Q9 and Q10), % | 1.0-1.1 |

| **Vitamin composition of biomass** | |
|---|---|
| E, mg/kg | 23-280.6-1.01 |
| K, mg/100 g lipids | 0.4-0.5 |
| B1 (thiamine), mg/kg | 1.0-2.0 |
| B6 (pyridoxine), mg/kg | 90-200 |
| PP (nicotinic acid), mg/kg | 8.3-10.2 |
| Folic acid, mg/kg | 90-200 |
| B12, mg/kg | 42-43 |
| Pantothenic acid, mg/kg | 4.2-7.5 |
| B2 (riboflavin), mg/kg | 0.6-1.01 |
| Beta-carotene, g/kg | at least 60 |

| **Amino acid composition of biomass (g/kg)** | |
|---|---|
| Lysine | 1.25-1.5 |
| Histidine | 0.5-1.4 |
| Arginine | 0.99-1.46 |
| Threonine | 1.03-1.86 |
| Serine | 0.97-1.97 |
| Glutamic acid | 3.44-4.40 |
| Glycine | 0.98-1.45 |
| Alanine | 1.34-2.21 |
| Isoleucine | 1.04-1.48 |
| Leucine | 1.60-3.68 |
| Thyrosine | 1.45-1.83 |
| Phenylalanine | 0.81-1.52 |

Besides, the biomass of Blakeslea trispora fungus contains up to 50-65% of lipids close in the composition of fatty acids to sunflower oil, among which to 60% oleic and to 20% linoleic and linolenic acids. In the phospholipid fraction phosphatidylcholine (25.5-26%) and phosphatidylethanolamine (36.5-37.0%) are detected.

The biomass is produced by a conventional microbiological method known to one skilled in the art, based on submerged cultivation of strains producers of Blakeslea trispora. As nutrient medium components use is made of byproducts and waste of various branches of the foodstuffs industry, antioxidants and natural stimulants. In the production process problems of maximum mycelium growth and β-carotene superbiosynthesis are solved.

In one of the preferred embodiments of the invention, for increasing fish bodyweight, the KPMK additive on conversion to β-carotene is preferably from about 50 mg/kg to 100 mg/kg of feed, most preferably from about 80 mg/kg to about 100 mg/kg.

In another preferred embodiment of the invention for enhancing the safety of baby fishes, the KPMK additive on conversion to β-carotene is preferably from about 30 mg/kg to 100 mg/kg of feed.

In yet another preferred embodiment of the invention, for pigmenting the fish meat, the additive of the Blakeslea trispora biomass is preferably from 1.2 kg/ton of feed to 1.7 kg/ton of feed or approximately from 72 g/ton to approximately 102 g/ton on conversion to β-carotene.

In a preferred embodiment of the invention for the pigmentation of meat of cultivated invertebrate hydrobionts, and, in particular, when cultivating food crustaceans, e.g., prawn, the additive of the Blakeslea trispora biomass must amount to, by analogy with astaxanthin introduced into their ration, from 50 mg/kg of feed to 150 mg/kg of feed on conversion to β-carotene.

The invention is further illustrated by Examples which are intended only to demonstrate the possibility of carrying out the invention by a person skilled in the art and the attainability of the claimed objects and advantages, as well as promising trends of use. The Examples illustrate particular (preferred) embodiments of the invention and cannot serve for limiting the Applicant's claims presented in the set of claims.

**Example 1.** Investigations were carried out on fish of the Cyprinus family, in particular on the carp (Cyprinus carpio). Experiments were carried out in 1,000-liter fishponds. The planting density was 100 individuals per fishpond. The control variant of the carp was grown on standard compound feed. In the experimental variant Blakeslea trispora biomass was additionally introduced (on conversion toβ-carotene) in an amount of from 50 mg/kg of feed to 100 mg/kg of feed. The initial weight of the carp was 70 g. Three months later the weight of the carp was:

| | |
|---|---|
| Control | 139.5 g (100%) |
| With addition of β-carotene, 50 mg/kg | 170.2 g (122.0%) |
| With addition of β-carotene, 80 mg/kg | 196.7 g (141.0%) |
| With addition of β-carotene, 100 mg/kg | 207.2 g (148.5%) |

**Example 2**. Same as in Example 1, but investigations were carried out on fish of the of the Ictalurus family, in particular on the channel catfish (Ictalurus punctatus). The initial weight of the channel catfish was 46 g. Four months later the weight of the channel catfish amounted to:

| | |
|---|---|
| Control | 239.4 g (100%) |
| With addition of β-carotene, 50 mg/kg | 300.0 g (125.3%) |
| With addition of β-carotene, 80 mg/kg | 336.8 g (140.7%) |
| With addition of β-carotene, 100 mg/kg | 349.5 g (146.0%) |

**Example 3**. In experiments for studying the safety of baby fishes 3-days' fry of the channel catfish were used. The initial weight of the baby fishes was 27.8 mg. The fry were fed with conventional comminuted feed. Fish-ponds in which the channel catfish fry were grown were placed into hydrobiont-growing troughs. Samples of conventional feed were added with the Blakeslea trispora biomass in an amount of from 0.43 g/kg of feed to 1.43 g/kg of feed, this being 30 mg/kg and 100 mg/kg of feed on conversion to β-carotene.

The results of the investigations are tabulated below:

| | Control | Experiment 30 mg/kg | Experiment 100 mg/kg |
|---|---|---|---|
| Weight after 5 days of growing | 38.8 | 44.8 | 51.4 |
| Gain in weight, % to control | 100.0 | 153.6 | 214.6 |
| Yield of fry after growing, % | 60 | 98 | 100 |

So, introducing β-carotene-containing Blakeslea trispora biomass into the feed for the channel catfish fry provides for the safety and increased yield of baby fishes.

**Example 4**. Experiments on the pigmentation of fish were carried out on fish of the salmon family, in particular on the Atlantic salmon and rainbow trout (Salmo gairdneri irideus). In the control version astaxanthin in the amount of 1 g/ton feed was used as the pigment. In the experimental versions Blakeslea trispora biomass was used. The Blakeslea trispora biomass was added in an amount of 1.0 kg/ton, 1.2 kg/ton, 1.3 kg/ton, 1.5 kg/ton and 1.7 kg/ton of feed, on conversion to β-carotene this being 60 g/ton, 72 g/ton, 78 g/ton, 90 g/ton and 102 g/ton, respectively. The intensity of fish meat pigmentation was checked visually, using the Salmofan 28 scale. The intensity of control samples with the use of astaxanthin was taken as 100%.

The results are presented below:

| **Pigmentation intensity, %** | | | |
|---|---|---|---|
| | Rainbow trout | | Atlantic salmon |
| Control (astaxanthin) | 100 | | 100 |
| With addition of β-carotene, 60 g/ton | 75 | | 80 |
| With addition of β-carotene, 72 g/ton | 100 | | 100 |
| With addition of β-carotene, 78 g/ton | 100 | | 100 |
| With addition of β-carotene, | 90 g/ton | 100 | 100 |
| With addition of β-carotene, | 102 g/ton | intensive red | color |
| | | (>100) | (>100) |

So, introducing β-carotene-containing biomass into the ration of the Atlantic salmon and rainbow trout provides for the pigmentation of fish meat.

It should be noted that on introducing β-carotene into the feed in the formulation of the Blakeslea trispora biomass, pigmentation of muscular tissue only was observed, in contrast to the control variant, wherein the pigment accumulated in the internal organs as well (in the liver, kidneys, gastrointestinal tract), this being indicative of a part of the pigment (astaxanthin) being lost during the pigmentation of fish. In the experimental fish samples tissues of the internal organs, perivisceral fat and mucous membranes were not pigmented and had natural color. The fish were sacrificed and frozen for 2 months. After unfreezing, the pigmentation was checked for integrity. Our investigations showed that no changes in the pigmentation had taken place.

**Example 5.** Expected results of pigmenting food crustaceans, particularly, prawns, both of the sea genera Penaeus, Metapenaeus and of the freshwater genera Macrobrachium. In the control variant Blakeslea trispora biomass was used in an amount of 50.0 mg/kg, 75 mg/kg and 150 mg/kg of feed. The pigmentation intensity of cooked prawns grown on experimental feeds should be checked visually, using the Roche Salmo Fan scale.

The pigmentation intensity of control samples is taken for 100%. The expected results are tabulated below:

| **Pigmentation intensity, %** | |
|---|---|
| Control (astaxanthin) | 100 |
| With addition of β-carotene, 50 g/kg | 80 |
| With addition of β-carotene, 75 mg/kg | 100 |
| With addition of β-carotene, 150 mg/kg >100 (red color) | |

Hence, introducing an additive of β-carotene-containing biomass into the ration of prawns must provide for the pigmentation of meat of these food crustaceans.

### REFERENCES

1. Prof. A.I. Svezhentsev (Ed.), Microbiological Carotene in the Ration of Animals and Avians, Dnepropetrovsk: Art-Press, 2002, 160 pp. (in Russian).
2. The use of microorganism biomass for food purposes. Collection of Scientific Papers. Pushchino, 1985, 119 pp. (in Russian).
3. Deev S.V., Butorova I.A., Avchieva P.B. in: Bio-tekhnologiya, 2000, No. 5, pp. 36-46 (in Russian).
4. Deev S.V., Butorova I.A., Avchieva P.B. in: Bio-tekhnologiya, 2001, No. 4, pp. 22-31 (in Russian).

## Claims

1. A feed additive for hydrobionts, comprising a complex of vitamins, antioxidants, amino acids and lipids, providing safety and enhancement of the yield of young hydrobionts, stimulation of their growth and pigmentation of meat, when rearing hydrobionts under controlled aquaculture conditions, said additive being β-carotene-containing biomass of the Blakeslea trispora fungus.

2. A feed additive according to claim 1, wherein said hydrobiont is fish.

3. A feed additive according to claim 2, wherein said fish are fishes of the salmon, carp and Ictalurus families.

4. A feed additive according to claim 2 or 3, wherein for stimulating the growth of fish said biomass contains from about 50 mg to about 100 mg of β-carotene per kg of feed.

5. A feed additive according to claim 2 or 3, wherein for increasing the yield of baby fishes said biomass contains from about 50 mg to about 100 mg of β-carotene per kg of feed.

6. A feed additive according to claim 2 or 3, wherein for enhancing the pigmentation of meat of fish of the salmon family said additive contains from about 72 to about 102 mg of β-carotene per kg of feed.

7. A feed additive according to claim 1, wherein said hydrobiont are food crustaceans.

8. A feed additive according to claim 7, wherein for ensuring the pigmentation of meat of food crustaceans, particularly prawns, said additive should contain from about 75 to 150 mg of β-carotene per kg of feed.

9. Use of the Blakeslea trispora fungus, β-carotene producer, for producing biomass, providing for safety and enhancement of the yield of young hydrobionts, stimulation of their growth and pigmentation of meat, when rearing hydrobionts under controlled aquaculture conditions.

10. Use according to claim 9, wherein said hydrobiont is fish.

11. Use according to claim 9, wherein said fish are fishes of the salmon, carp and Ictalurus families.

12. Use according to claim 9, wherein said hydrobiont are food crustaceans.
